# EUROPÄISCHE PATENTSCHRIFT

(11) **EP 0 619 495 B1**
(45) Veröffentlichungstag und Bekanntmachung des Hinweises auf die Patenterteilung: **21.05.1997**
(21) Anmeldenummer: 94103621.2
(22) Anmeldetag: 09.03.1994
(51) Int. Cl.: G01P 15/08

(54) **Verfahren zur Herstellung von Tunneleffekt-Sensoren**
Process for manufacturing tunnel effect sensors
Procédé pour la fabrication de détecteurs à effet tunnel

(30) Priorität: 05.04.1993 DE 4311121
(43) Veröffentlichungstag der Anmeldung: 12.10.1994
(73) Patentinhaber: SIEMENS AKTIENGESELLSCHAFT, 80333 München (DE)
(72) Erfinder: Bertagnolli, Emmerich, Dr., D-80799 München (DE); Biebl,Markus, Dipl.-Phys., D-81543 München (DE)

(56) Entgegenhaltungen:
- EP-A- 0 150 885
- EP-A- 0 434 330
- US-A- 4 638 669
- APPLIED PHYSICS LETTERS., Bd.58, Nr.1, 7. Januar 1991, NEW YORK US Seiten 100 - 102 T. W. KENNY ET AL.

## Beschreibung

Die vorliegende Erfindung betrifft ein Herstellungsverfahren für Tunnel-Effekt-Beschleunigungssensoren auf Silizium.

Moderne Navigationssysteme erfordern kleine, einfach herstellbare und zuverlässige Beschleunigungssensoren mit einer Meßgenauigkeit bis in den Bereich von 1 millionstel Erdbeschleunigung. Auch bei anderen Sensoren, wie z. B. bei Mikrophonen und Drucksensoren, ist es erforderlich, eine zeitlich variable Wegdifferenz bei beweglich angebrachten Teilen mit sehr hoher Genauigkeit zu bestimmen. Das ist möglich unter Ausnutzung des Tunneleffektes. Bei derartigen Sensoren, wie sie z. B. von T.W. Kenny e.a. in Appl. Phys. Lett. 58, 100 - 102 (1991) und J. Vac. Sci. Technol. A 10 (4), 2114 - 2118 (1992) beschrieben sind, wird der Tunneleffekt zwischen einer an einem beweglichen Balken angeordneten Spitze und dem Siliziumsubstrat für die Messung ausgenutzt.

Aufgabe der vorliegenden Erfindung ist es, ein vereinfachtes Verfahren zur Herstellung verbesserter Ausführungsformen derartiger Tunnel-Effekt-Sensoren anzugeben.

Diese Aufgabe wird mit dem Verfahren mit den Merkmalen des Anspruches 1 gelöst. Weitere Ausgestaltungen ergeben sich aus den abhängigen Ansprüchen.

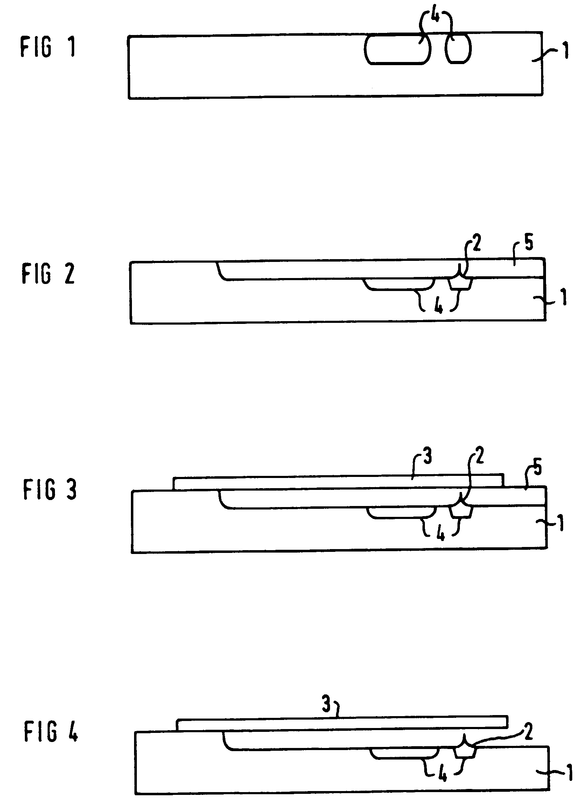

Bei dem erfindungsgemäßen Verfahren wird die Tunnelspitze des Sensors auf der Oberfläche eines Siliziumsubstrates hergestellt. Der für die Spitze vorgesehene Bereich der Oberfläche des Substrates wird mit einer sauerstoffundurchlässigen Maske, z. B. Nitrid, abgedeckt und das Silizium seitlich dieser Maske oxidiert. Den verschiedenen weiter unten beschriebenen Ausführungsbeispielen des erfindungsgemäßen Verfahrens ist dabei gemeinsam, daß vor oder nach dem Aufbringen dieser Maske die Form der Substratoberfläche so gestaltet wird, daß als Resultat des Oxidationsvorganges die Grenzfläche zwischen dieser entstehenden Oxidschicht und dem restlichen Silizium des Substrates eine Spitze unterhalb der Maske ausbildet. Diese Formgebung der Substratoberfläche kann z. B. vor dem Herstellen der für das weitere Oxidieren verwendeten Maske durch einen primären Oxidationsschritt erfolgen. Es kann auch statt dessen nach dem Aufbringen und Strukturieren der Maske eine Mesa unter Verwendung dieser Maske in das Substrat geätzt werden. Der anschließende Oxidationsprozeß liefert dann ebenfalls ein gewünschtes Ergebnis. Als Maske bei den Oxidationsschritten kann jeweils ein beliebiges Material verwendet werden, das den Durchtritt von Sauerstoff verhindert. Das Material kann z. B. Si₃N₄ sein, weswegen in der weiteren Beschreibung der Einfachheit halber das Material als Nitrid bezeichnet wird. Bei der Oxidation des Siliziums entsteht SiO₂. Diese Oxidation kann z. B. in einer heißen Sauerstoffatmosphäre erfolgen. Ausreichende Schichtdicken für die Oxidschicht an der Substratoberfläche erhält man z. B. unter Wasserdampf bei 950 °C bis 1000 °C über eine Dauer von z. B. 6 Stunden. Das SiO₂ kann entfernt werden z. B. durch naßchemisches Ätzen oder mittels eines HF-Plasmas, wobei 4H + 4F + SiO₂ 2H₂O und SiF₄ ergeben. Diese Verfahrensschritte zur Behandlung des Siliziums bzw. Siliziumoxides sind an sich bekannt und werden bei dem erfindungsgemäßen Herstellungsverfahren dementsprechend eingesetzt. Es folgt eine Beschreibung des erfindungsgemäßen Verfahrens anhand der Figuren 1 bis 13.
- Fig. 1 bis 4: zeigen einen erfindungsgemäß hergestellten Tunneleffekt-Beschleunigungssensor im Querschnitt nach verschiedenen Schritten des Herstellungsverfahrens.
- Fig. 5 bis 10: zeigen weitere Schritt des Herstellungsverfahrens, die zwischen den Schritten der Figur 1 und der Figur 2 vorgenommen werden.
- Fig. 11 bis 13: zeigen Alternativen zu den Herstellungsschritten der Figuren 6 bis 10.

Der mit dem erfindungsgemäßen Verfahren hergestellte Tunneleffekt-Sensor nutzt die Möglichkeit, mit Hilfe des Tunneleffektes kleinste Wegdifferenzen eines beweglich angeordneten Teiles zu messen. Bei einem Beschleunigungssensor z. B. ist ein elektrisch leitend dotierter Siliziumbalken an einem Ende auf einem Substrat aus Silizium verankert. Der Balken ist biegefähig, und es kommt bei einer auftretenden Beschleunigung senkrecht zur Substratoberfläche zu einer Verbiegung dieses Balkens, die von der Größe der Beschleunigung abhängt. Diese Verbiegung wird durch eine unterhalb des Balkens befindliche Tunnelelektrode mit extremer Genauigkeit bestimmt. Die Tunnelelektroden sind durch den Balken und eine unterhalb des Balkens und auf diesen hinweisende Spitze auf der Oberfläche des Substrates gebildet. In dem Substrat ist eine elektrisch leitfähige Struktur für die elektrischen Anschlüsse durch Dotieren ausgebildet. Über diese Leiterstruktur kann zwischen der Tunnelspitze und dem leitfähigen Siliziumbalken über dessen Verankerung auf dem Substrat ein Potential angelegt werden. Weitere Elektroden im Substrat und in dem Balken oder in dem Balken und in einer den Sensor nach oben überdeckenden weiteren (Poly-)Siliziumschicht dienen dazu, eine auftretende Beschleunigung des Balkens durch eine elektrostatische Kraft zu kompensieren. Für die für die Regelung vorgesehene elektronische Schaltung bedeutet das, daß der Tunnelstrom zwischen Balken und Spitze auf einem konstanten Wert gehalten wird. Die erforderliche Kompensationsspannung ist ein direktes Maß für die auftretende Beschleunigung. Da schon geringste Verbiegungen des Balkens zu einer großen Änderung des Tunnelstroms führen, ist diese Methode geeignet, Beschleunigungen mit einer sehr großen Genauigkeit zu messen. Durch die Anwendung der beschriebenen Kompensationsmethode ist es möglich, den Meßbereich von 1 millionstel Erdbeschleunigung bis hin zu dem Hundertfachen der Erdbeschleunigung auszudehnen. Die Herstellung von Tunnelspitze, Biegebalken und Elektroden geschieht mit Prozeßschritten der Mikromechanik, die mit der Technologie der Herstellung von integrierten Schaltungen kompatibel sind. Das hat den Vorteil, daß die elektronische Schaltung für Regelung und Auswertung zusammen mit dem eigentlichen Sensor auf einem leiterbauelement integriert werden kann und daher die Genauigkeit und das Signal-Rausch-Verhältnis des Sensors wesentlich verbessert werden.

Bei der Herstellung z. B. des beschriebenen Beschleunigungssensors wird ein Substrat 1 aus Silizium an der Oberfläche entsprechend der erforderlichen Struktur elektrischer Leiter 4 dotiert. Zu diesen Leitern 4 gehören insbesondere dotierte Bereiche, die für die herzustellende Spitze und eine Kompensationselektrode vorgesehen sind, wie in Fig. 1 dargestellt ist. Auf der dotierten Oberfläche des Substrates 1 wird z. B. in einem der weiter unten beschriebenen Verfahren die Spitze 2 als Tunnelelektrode hergestellt. Bei dem erfindungsgemäßen Verfahren wird diese Spitze 2 im Gegensatz zu bisher üblichen Verfahren direkt aus dem Material des ursprünglichen Substrates 1 hergestellt. Eine Oxidschicht 5 bedeckt diese Spitze 2 und planarisiert die Oberfläche. Wie in Fig. 2 dargestellt ist, ist die Spitze 2 von dieser Oxidschicht 5 soweit bedeckt, daß der Abstand zwischen der Spitze und dem herzustellenden Balken durch die Dicke der Oxidschicht 5 bestimmt ist. Darauf wird ganzflächig eine Polysiliziumschicht abgeschieden, die für einen elektrischen Anschluß mit einem elektrisch leitend dotierten Bereich des Substrates 1 verbunden ist. Diese Verbindung mit dem Silizium des Substrates 1 kann z. B. dadurch hergestellt werden, daß vor dem Aufbringen dieser Polysiliziumschicht an den entsprechenden Stellen Öffnungen in die Oxidschicht 5 geätzt werden. Falls wie in Fig. 3 gezeichnet die Oxidschicht 5 nur einen Teil der Substratoberfläche einnimmt und außerhalb der Oxidschicht 5 das Silizium des Substrates 1 an der Oberfläche frei ist, genügt es, die Polysiliziumschicht ganzflächig aufzubringen. Diese Polysiliziumschicht wird strukturiert, so daß der in Fig. 3 eingezeichnete Balken, der auf der Oberfläche des Substrates 1 verankert ist, übrig bleibt. Nach dem Entfernen der Oxidschicht 5 bleibt der frei bewegliche Balken 3 über der Spitze 2 in kleinem Abstand zu dieser Spitze 2 frei stehen, wie in Fig. 4 dargestellt ist. Das erfindungsgemäße Verfahren eignet sich nicht nur für diesen speziellen Beschleunigungssensor, sondern für jeden Sensor, bei dem eine Tunnelelektrode als Spitze auf dem Substrat angeordnet ist.

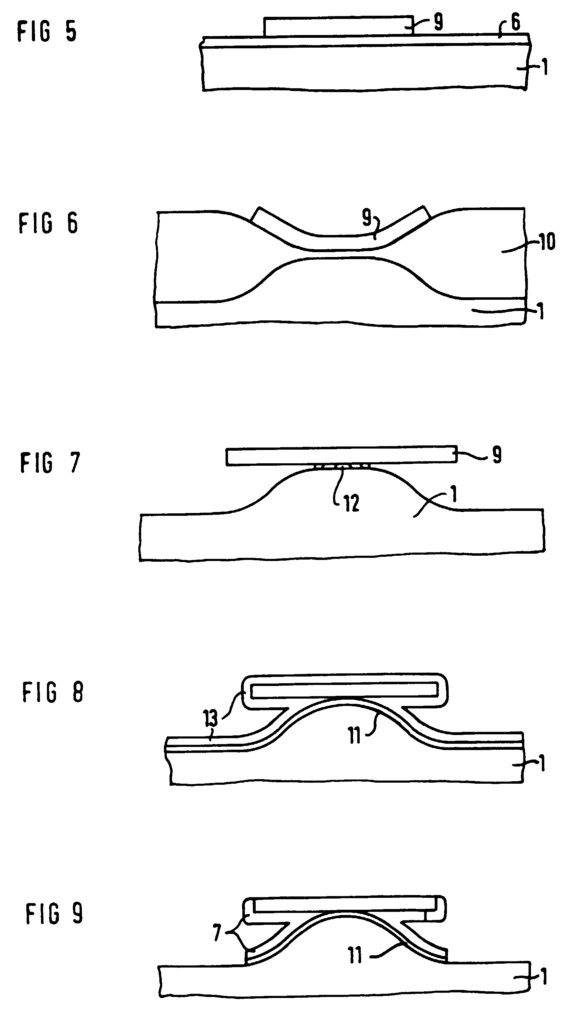

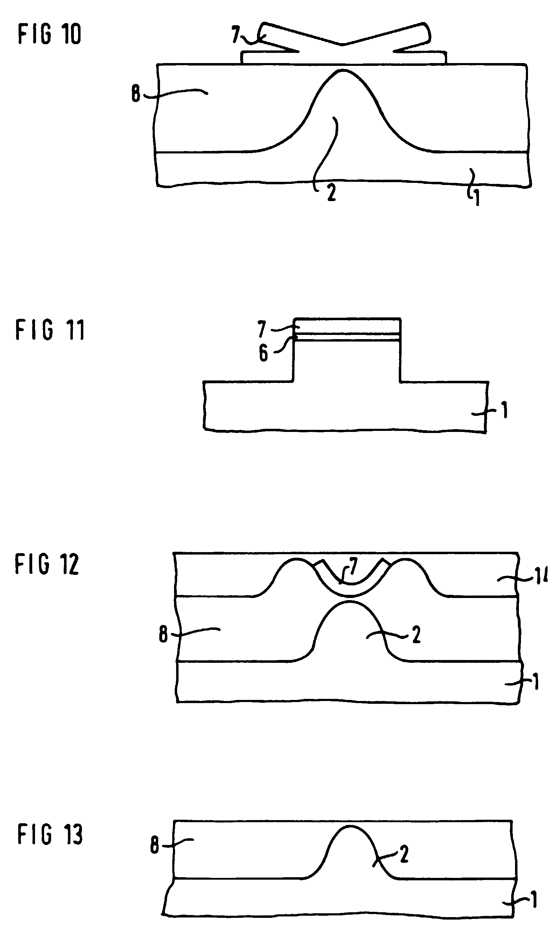

Die Herstellung der Spitze 2 wird jetzt anhand der Figuren 5 bis 13 für zwei verschiedene Ausführungsbeispiele beschrieben. In den Figuren ist jeweils ein Ausschnitt des Substrates um den für die Tunnelelektrode dotierten Bereich gezeichnet. Die Oberfläche des Substrates 1 wird zunächst z. B. unter einer heißen O₂-Atmosphäre zu einer dünnen Pad-Oxid-Schicht 6 oxidiert. Auf diese Pad-Oxid-Schicht 6 wird wie in Fig. 5 dargestellt eine erste Maske 9 aus Nitrid aufgebracht (s. hierzu die Bemerkung weiter oben). Das SiO₂ dieser Pad-Oxid-Schicht 6 vermindert eine auftretende Spannung zwischen dem Silizium des Substrates 1 und dieser ersten Maske 9 in dem nachfolgenden Oxidationsprozeß. Unter Verwendung dieser ersten Maske 9 wird die Oberfläche des Substrates 1 oxidiert, was z. B. wie beschrieben unter einer Wasserdampfatmosphäre erfolgen kann. Das Silizium des Substrates 1 quillt bei der Aufnahme des Sauerstoffes bei dem Oxidationsprozeß seitlich der Maske auf zu einer ersten Oxidschicht 10, wie in Fig. 6 gezeichnet ist. Diese erste Oxidschicht 10 wird nachfolgend z. B. durch naßchemisches Ätzen oder mittels des beschriebenen Plasmaprozesses isotrop entfernt. Durch das isotrope Ätzen wird die erste Oxidschicht 10 auch unterhalb der ersten Maske 9 bis auf einen verbleibenden Rest 12 (s. Fig. 7) entfernt, so daß die erste Maske 9 auf dem Substrat 1 verbleibt. Wegen der Elastizität der ersten Maske 9 nimmt sie zumindest näherungsweise die ursprüngliche ebene Form wieder ein. Der Rest 12 der Oxidschicht wird durch weitere Oxidation zu einer ganzflächigen weiteren Pad-Oxid-Schicht 11 ergänzt. Auf diese weitere Pad-Oxid-Schicht 11 wird isotrop ganzflächig eine Schicht 13 aus Nitrid (s. hierzu die Bemerkung weiter oben) aufgebracht. Aus der sich ergebenden Struktur der Fig. 8 wird durch isotropes Ätzen die Struktur der Fig. 9 hergestellt. Das Nitrid wird dabei so weit abgeätzt, daß die Maske 7 aus Nitrid übrig bleibt und das Silizium des Substrates 1 seitlich dieser Maske 7 freigelegt ist. Von der weiteren Pad-Oxid-Schicht 11 bleibt ein restlicher Anteil unter dieser Maske 7, der wieder zur Verminderung der Spannung zwischen dem Nitrid der Maske 7 und dem Silizium des Substrates 1 dient. Die Schicht 13 kann z. B. aufgebracht werden, indem in der Gasphase z. B. bei 700 °C Silan (SiₙH₂ₙ₊₂) und Ammoniak (NH₃) auf der Oberfläche des Substrates zu Si₃N₄ chemisch umgesetzt werden. Die Maske 7 der Fig. 9 wird als Schutz bei dem nachfolgenden Oxidationsschritt verwendet. Dabei ergibt sich die Struktur der Fig. 10, bei der seitlich der Maske 7 das Silizium des Substrates 1 zu einer Oxidschicht 8 aufgequollen ist. Unter der Maske 7 bleibt dabei das ursprüngliche Silizium des Substrates 1 als Spitze 2 stehen. Bei geeigneter Wahl der Oxidationsdauer wird die Oberfläche dieser Oxidschicht 8 näherungsweise planar. Die seitlichen Anteile der Maske 7 werden nach oben gedrückt, so daß die Maske 7 etwa die Gestalt erhält, die in Fig. 10 eingezeichnet ist. Nach dem Entfernen der Maske 7 erhält man die Struktur der Fig. 2. Die Oxidschicht 8 kann entweder eine ganzflächige Schicht sein oder wie in Fig. 2 als in die Substratoberfläche eingebettete Oxidschicht 5 auf einen Bereich um die Spitze 2 begrenzt sei. Eine derartige Begrenzung erhält man in naheliegender Weise durch weitere Masken auf der Oberfläche des Substrates.

Statt einer zweifachen Oxidation ist es möglich, die zu oxidierende Oberfläche des Substrates so zu strukturieren, daß die bei Oxidation unter der Maske entstehende Spitze ausreichend prominent ausgebildet ist. Ausgehend von der in Fig. 5 dargestellten Struktur werden die Pad-Oxid-Schicht 6 und ein darunterliegender schichtartiger Anteil des Siliziums an der Oberfläche des Substrates 1 unter Verwendung der Maske anisotrop entfernt. Dadurch wird die in Fig. 11 im Querschnitt gezeichnete Mesa im Bereich der herzustellenden Spitze hergestellt. Die hier eingezeichnete Maske 7 ist die Maske 9 der Figur 5 und entspricht hinsichtlich Anspruch 1 der Maske der Fig. 9. Die Strukturierung der Oberfläche des Substrates 1 wird hier also durch die Mesaätzung und nicht durch einen vorangehenden Oxidationsschritt hergestellt. In Fig. 12 ist das Resultat eines nachfolgenden Oxidationsschrittes unter Verwendung der Maske 7 eingezeichnet. Das Silizium des Substrates 1 wird zu der Oxidschicht 8 oxidiert und quillt seitlich der Maske 7 zu Wülsten auf, wobei unter der Maske 7 das Silizium des Substrates 1 als Spitze 2 stehen bleibt. Die Oberfläche der Oxidschicht 8 läßt sich z. B. mechanisch planarisieren. Es ist auch möglich, vor oder nach dem Entfernen der Maske 7 die Oberfläche mit einem Lack 14 einzuebnen. Die Struktur wird dann gleichmäßig rückgeätzt, bis eine planare Oberfläche der Oxidschicht 8 wie in Fig. 13 freiliegt. Dabei wird dafür gesorgt, daß über der Spitze 2 ein dünner Anteil der Oxidschicht 8 vorhanden ist, um den Abstand zwischen der Spitze 2 und dem darüber herzustellenden Balken 3 wie in Fig. 3 festzulegen.

Der Durchmesser der herzustellenden Spitze läßt sich über die Größe (Durchmesser) der Maske 7 und die Dauer der Oxidation einstellen. Die Steilheit der Flanken der Spitze kann durch die Prozeßbedingungen während der Oxidation und insbesondere durch die Dicke der zuvor hergestellten Pad-Oxid-Schicht beeinflußt werden. Das Planarisieren der Oxidschicht 8 in Fig. 10 bzw. Fig. 13 bzw. der Oxidschicht 5 in Fig. 2 kann entfallen, wenn im Verlaufe der Herstellung der Spitze diese Oxidschicht 8, 5 eine ausreichend planare Oberfläche ausgebildet hat. Das diesbezügliche zusätzliche Merkmal in Anspruch 4 ist dementsprechend so zu verstehen, daß ein zusätzlicher Verfahrensschritt zur Planarisierung tatsächlich nur dann ausgeführt wird, wenn die Oxidschicht 8,5 nicht bereits ausreichend planar ist. Die für die Herstellung des Balkens 3 ganzflächig aufgebrachte Polysilizumschicht wird zweckmäßigerweise vor der Strukturierung so dotiert, daß über der Spitze 2 ein leitfähiger Anteil des Balkens 3 vorhanden ist und mindestens eine leitfähige Verbindung dieses Anteiles zu dem entsprechenden Anschluß unter der Verankerung des Balkens 3 im Substrat 1 vorhanden ist. Ggf. kann auch eine der Kompensationselektroden in dem Balken 3 oberhalb der betreffenden Gegenelektrode 4 im Substrat hergestellt werden. Die Kompensationselektrode in dem Balken 3 kann stattdessen an der dem Substrat 1 gegenüberliegenden Oberfläche des Balkens 3 ausgebildet werden, wenn dieser Balken von einer weiteren Polysiliziumschicht nach außen umschlossen wird. Die zweite Kompensationselektrode wird dann durch Dotieren in dieser äußeren Polysiliziumschicht ausgebildet. Diese Polysiliziumschicht kann insbesondere evakuiert werden, um die freie Beweglichkeit des Balkens zu vergrößern. Das erfindungsgemäße Verfahren kann wie erwähnt auf beliebige Tunneleffekt-Sensoren mit einer auf dem Substrat angeordneten spitzen Tunnel-Elektrode angewendet werden. Es kann z. B. durch die abgeschiedene Polysiliziumschicht statt des Balkens die Membran eines Mikrophons gebildet werden, deren Verbiegung unter Druckschwankungen infolge von Schalleinwirkung durch die Veränderung des Tunnelstroms gemessen wird. Auf die beschriebene Weise kann auf einfache Art ein sehr empfindliches Mikrophon hergestellt werden, dessen Membranbewegungen durch eine entsprechende Vorspannung der Kompensationselektroden elektrostatisch kompensiert werden können und das daher wegen der nicht auftretenden Dämpfung auch in sehr hohen Frequenzbereichen einsetzbar ist. Das erfindungsgemäße Herstellungsverfahren verwendet Standardprozesse der Halbleitertechnologie und ist daher auch im Hinblick auf die Integration weiterer elektronischer und mechanischer Komponenten in einem Bauelement hervorragend geeignet.

## Patentansprüche

1. Verfahren zur Herstellung von Tunneleffekt-Sensoren auf einem Substrat (1) aus Silizium, das mit einer durch Dotierung hergestellten Struktur elektrischer Leiter (4) versehen ist, bei dem eine Spitze (2) aus Silizium auf diesem Substrat (1) hergestellt wird,
wobei in einem ersten Schritt eine dünne Schicht an der Oberfläche des Substrates (1) zu einer Pad-Oxid-Schicht (6) oxidiert wird,
in einem zweiten Schritt eine Maske (7) aus einem Material, das den Durchtritt von Sauerstoff verhindert, hergestellt wird,
in einem dritten Schritt unter Verwendung dieser Maske (7) eine Schicht an der Oberfläche des Substrates (1) zu einer Oxidschicht (8) oxidiert wird, so daß unter der Maske (7) die Spitze (2) entsteht,
in einem vierten Schritt die Maske (7) entfernt wird, in einem fünften Schritt auf einer die Spitze überdeckenden, planaren Oberfläche der Oxidschicht (8) eine Siliziumschicht (3) aufgebracht wird, aus der eine Gegenelektrode (4) strukturiert wird und in einem sechsten Schritt diese Oxidschicht (8) entfernt wird.

2. Verfahren nach Anspruch 1,
bei dem zwischen dem ersten und dem zweiten Schritt in einem ersten weiteren Schritt eine erste Maske (9) aus einem Material, das den Durchtritt von Sauerstoff verhindert, auf diese Pad-Oxid-Schicht (6) aufgebracht und strukturiert wird,
dann in einem zweiten weiteren Schritt unter Verwendung dieser ersten Maske (9) eine Schicht an der Oberfläche des Substrates (1) zu einer ersten Oxidschicht (10) oxidiert wird,
dann in einem dritten weiteren Schritt diese erste Oxidschicht (10) isotrop fast vollständig entfernt wird, aber so, daß die erste Maske (9) stehen bleibt,
dann in einem vierten weiteren Schritt eine weitere Pad-Oxid-Schicht (11) hergestellt wird und
dann der zweite Schritt ausgeführt wird, indem eine Schicht (13) aus einem Material, das den Durchtritt von Sauerstoff verhindert, ganzflächig isotrop aufgebracht und strukturiert wird.

3. Verfahren nach Anspruch 1,
bei dem zwischen dem zweiten und dem dritten Schritt diese Pad-Oxid-Schicht (6) und ein schichtartiger Anteil an der Oberfläche des Substrates (1) seitlich dieser Maske (7) entfernt werden.

4. Verfahren nach einem der Ansprüche 1 bis 3,
bei dem nach dem vierten Schritt diese Oxidschicht (8) planarisiert wird.

5. Verfahren nach Anspruch 4,
bei dem als fünfter Schritt eine Polysiliziumschicht so aufgebracht und so weit entfernt wird, daß über der Spitze (2) ein auf dem Silizium des Substrates (1) verankerter Balken (3) übrig bleibt.

## Claims

1. Process for producing tunnelling-effect sensors on a silicon substrate (1) which is provided with a structure, produced by doping, of electrical conductors (4), in which a silicon spike (2) is produced on this substrate (1),
a thin layer on the surface of the substrate (1) being oxidized to form a pad oxide layer (6) in a first step, a mask (7) of a material which prevents the penetration of oxygen being produced in a second step,
by using this mask (7), a layer on the surface of the substrate (1) being oxidized to form an oxide layer (8) in a third step, so that the spike (2) is formed under the mask (7),
the mask (7) being removed in a fourth step,
a silicon layer (3), from which a counter-electrode (4) is structured, being applied in a fifth step to a planar surface, covering the spike, of the oxide layer (8), and this oxide layer (8) being removed in a sixth step.

2. Process according to Claim 1, in which, between the first step and the second step,
a first mask (9) of a material which prevents the penetration of oxygen is applied to this pad oxide layer (6) and structured, in a first further step,
using this first mask (9), a layer on the surface of the substrate (1) is then oxidized in a second further step to form a first oxide layer (10),
this first oxide layer (10) is then isotropically removed almost completely, but so that the first mask (9) remains, in a third further step,
a further pad oxide layer (11) is then produced in a fourth further step, and
the second step is then carried out by isotropically applying, over the entire surface, a layer (13) of a material which prevents the penetration of oxygen, and structuring it.

3. Process according to Claim 1, in which, between the second step and the third step, this pad oxide layer (6) and a layer-like portion on the surface of the substrate (1) are removed laterally with respect to this mask (7).

4. Process according to one of Claims 1 to 3, in which, after the fourth step, this oxide layer (8) is planarized.

5. Process according to Claim 4, in which, as the fifth step, a polysilicon layer is applied in such a way, and removed to such an extent, that a bar (3) anchored on the silicon of the substrate (1) remains above the spike (2).

## Revendications

1. Procédé pour la fabrication de détecteurs à effet tunnel sur un substrat (1) en silicium, qui est muni d'une structure de conducteurs électriques (4) fabriquée par dopage, au cours duquel on fabrique une pointe (2) en silicium sur ce substrat (1),
où au cours d'une première étape, on oxyde une fine couche à la surface du substrat (1) en une couche d'oxyde-pad (6),
où dans une deuxième étape, on fabrique un masque (7) à partir d'un matériau qui empêche le passage d'oxygène,
où dans une troisième étape, on oxyde en utilisant ce masque (7) une couche à la surface du substrat (1) en une couche d'oxyde (8), de telle manière qu'il se forme sous le masque (7) la pointe (2),
où dans une quatrième étape, on enlève le masque (7),
où dans une cinquième étape, on applique sur une surface plane de la couche d'oxyde (8) recouvrant la pointe une couche de silicium (3) à partir de laquelle on structure une contre-électrode (4), et
où dans une sixième étape, on enlève cette couche d'oxyde (8).

2. Procédé selon la revendication 1, au cours duquel on applique et on structure entre la première et la deuxième étape dans une première étape supplémentaire un premier masque (9) constitué d'un matériau qui empêche le passage d'oxygène, sur cette couche d'oxyde-pad (6),
on oxyde alors dans une deuxième étape supplémentaire en utilisant ce premier masque (9) une couche à la surface du substrat (1) en une première couche d'oxyde (10),
on enlève ensuite dans une troisième étape supplémentaire cette première couche d'oxyde (10) de manière isotrope de façon presque totale, mais de telle façon que le premier masque (9) subsiste,
on fabrique alors dans une quatrième étape supplémentaire une couche supplémentaire d'oxyde-pad (11) et
on effectue alors la deuxième étape, dans laquelle une première couche (13) constituée d'un matériau qui empêche le passage d'oxygène est appliquée et structurée de manière isotrope sur la totalité de la surface.

3. Procédé selon la revendication 1, au cours duquel on enlève entre la deuxième et la troisième étape cette couche d'oxyde-pad (6) et une fraction de couche de la surface du substrat (1) à côté de ce masque (7).

4. Procédé selon l'une quelconque des revendications 1 à 3, au cours duquel on aplanit après la quatrième étape cette couche d'oxyde (8).

5. Procédé selon la revendication 4, au cours duquel on applique à titre de cinquième étape une couche de polysilicium et que l'on enlève jusqu'à ce qu'il subsiste au-dessus de la pointe (2) une barre (3) ancrée sur le silicium du substrat (1).
